# EUROPEAN PATENT APPLICATION

(11) **EP 4 195 338 A1**
(43) Date of publication of application: **14.06.2023**
(21) Application number: 21853757.9
(22) Date of filing: 03.08.2021
(51) Int. Cl.: H01M 8/1213, H01M 4/86, H01M 4/90, H01M 4/92, H01M 8/12, H01M 8/1226

(54) **SOLID ELECTROLYTE ASSEMBLY AND ELECTROCHEMICAL ELEMENT COMPRISING SAME**

(30) Priority: 07.08.2020 JP 2020135199
(71) Applicant: Mitsui Mining & Smelting Co., Ltd., Shinagawa-ku Tokyo 141-8584 (JP)
(72) Inventor: SHIMIZU, Haruki, Ageo-shi, Saitama 362-0021 (JP); OYAMA, Tokiharu, Ageo-shi, Saitama 362-0021 (JP); YABU, Sakiko, Ageo-shi, Saitama 362-0021 (JP); IDE, Shingo, Ageo-shi, Saitama 362-0021 (JP)
(74) Representative: Novagraaf Technologies
(86) International application number: PCT/JP2021/028807
(87) International publication number: WO 2022/030504

(57) **Abstract**

A solid electrolyte assembly (10) includes a substrate (11), a first electrode layer (12), and a solid electrolyte layer (13), wherein the first electrode layer (12) and the solid electrolyte layer (13) are stacked in this order on one face of the substrate (11). The first electrode layer (12) includes: platinum or the like; and a metal oxide having ion conductivity. The substrate (11) has a plurality of through-holes (hole portions (14)) extending in a direction that intersects a face of the substrate that is opposed to the first electrode layer (12). The metal oxide preferably has oxide ion conductivity. The metal oxide preferably includes one or more rare earths.

## Description

### Technical Field

The present invention relates to a solid electrolyte assembly and an electrochemical element including the same.

### Background Art

In the technical field of solid electrolyte fuel cells, techniques are known in which a solid electrolyte membrane and an electrode membrane are formed on a substrate having a plurality of through-holes extending in the thickness direction, as described in, for example, Patent Literature 1 and Non-Patent Literature 1. If these through-holes are provided, the gas permeability such as oxygen permeability in electrochemical elements can be further improved.

As shown in Patent Literature 1 and Non-Patent Literature 1, a laminate of a solid electrolyte membrane and an electrode membrane for solid oxide fuel cells is produced by forming a solid electrolyte support on a substrate having through-holes and forming an electrode on the surface of the solid electrolyte.

### Citation List

### Patent Literature

Patent Literature 1: WO 2007/084776

### Non-Patent Literature

Non-Patent Literature 1: Journal of Power Sources 206 (2012) 84-90

### Summary of Invention

However, such a laminate of a solid electrolyte membrane and an electrode membrane in a solid electrolyte fuel cell is generally thin, for the purpose of increasing the oxide ion conductivity, and thus the mechanical strength thereof cannot be said to be large. In a solid electrolyte fuel cell with the structure described above, the portions of the solid electrolyte layer positioned above the through-holes is not supported by a support member. Thus, the solid electrolyte layer is likely to be deformed or damaged by external forces, such as those caused by expansion and contraction and those caused by the release of stress that the solid electrolyte receives from the substrate when the through-holes are formed in the substrate, and accordingly, the stable operation of the fuel cell may be hindered.

Therefore, it is an object of the present invention to provide a solid electrolyte assembly and an electrochemical element that can solve the above-described disadvantages of the conventional techniques.

The present invention achieves the above-described object by providing a solid electrolyte assembly including a substrate, a first electrode layer, and a solid electrolyte layer, wherein the first electrode layer and the solid electrolyte layer are stacked in this order on one face of the substrate,
wherein the first electrode layer includes: at least one selected from the group consisting of a platinum group element, gold, and an alloy containing any of these elements; and a metal oxide having ion conductivity, and
the substrate has a plurality of through-holes extending in a direction that intersects a face of the substrate that is opposed to the first electrode layer.

Furthermore, the present invention provides an electrochemical element including the solid electrolyte assembly.

### Brief Description of Drawings

[Fig. 1] Fig. 1 is a schematic diagram showing the structure of an embodiment of a solid electrolyte assembly of the present invention.
[Fig. 2] Fig. 2 is an enlarged diagram showing a main portion of the solid electrolyte assembly shown in Fig. 1 when viewed from the substrate side.
[Fig. 3] Fig. 3 is a schematic diagram showing an enlarged main portion of another embodiment of the solid electrolyte assembly of the present invention.
[Fig. 4] Fig. 4 is an optical microscope image of a solid electrolyte assembly of Example 1.
[Fig. 5] Fig. 5 is an optical microscope image of a solid electrolyte assembly of Example 3.
[Fig. 6] Fig. 6 is an optical microscope image of a solid electrolyte assembly of Comparative Example 1.

### Description of Embodiment

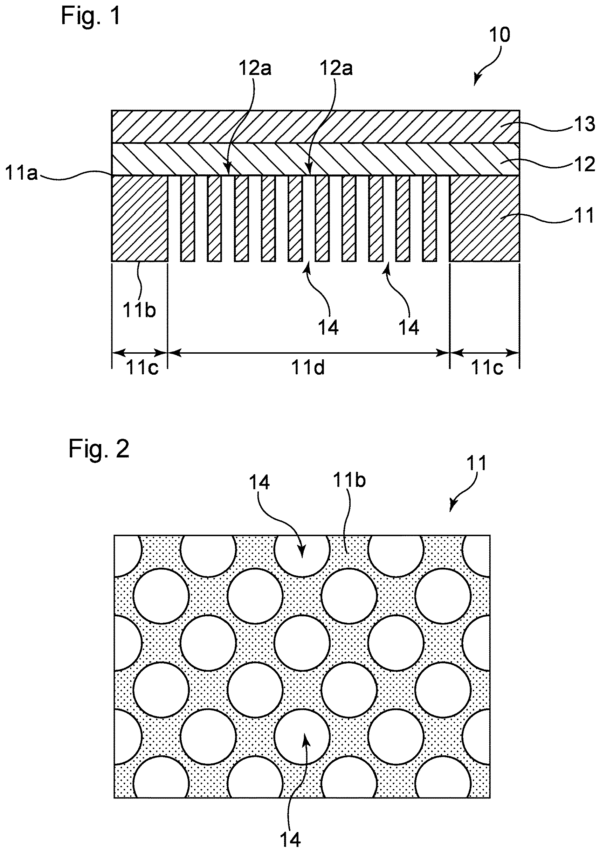

The present invention will be described below on the basis of preferred embodiments thereof with reference to the drawings. In an embodiment, the solid electrolyte assembly of the present invention has the structure shown in Fig. 1. The solid electrolyte assembly 10 shown in Fig. 1 is configured such that a first electrode layer 12 and a solid electrolyte layer 13 are stacked in this order on one face of a substrate 11.

The substrate 11 is used mainly as a support for the first electrode layer 12 and the solid electrolyte layer 13, which will be described later. The substrate 11 is a plate-like member having two main faces 11a and 11b opposed from each other. There is no particular limitation on the shape of the substrate 11 in plan view, and the shape may be any shape, such as a polygonal shape (e.g., a rectangular shape), a circular shape, or an elliptical shape.

A plurality of hole portions 14 are formed through the substrate 11. The hole portions 14 extend in the direction that intersects the face of the substrate 11 that is opposed to the first electrode layer 12, that is, the main face 11a shown in Fig. 1. The hole portions 14 typically extend in the direction that is orthogonal to the face of the substrate 11 that is opposed to the first electrode layer 12. The hole portions 14 extend between the two main faces 11a and 11b of the substrate 11 so as to extend through the substrate 11, and are open in the main faces 11a and 11b. That is to say, the hole portions 14 are through-holes. The hole portions 14 are formed for the purpose of improving the gas supply performance upon supplying oxygen gas and the like to the first electrode layer 12 when an electrochemical element including the solid electrolyte assembly 10 is used.

Fig. 2 is an enlarged diagram showing a main portion of the main face 11b, which is the face exposed to the outside, of the two main faces of the substrate 11. As shown in Fig. 2, the hole portions 14 are open in the main face 11b. The shape of the opening of the hole portion 14 in the main face 11b may be, for example, a circle, as shown in this diagram. It will be appreciated that the shape of the opening of the hole portion 14 is not limited thereto, and may be in another shape, such as a polygon (triangle, quadrangle, etc.), an ellipse, or combination thereof. In particular, the opening of the hole portion is preferably in the shape of a circle or a regular polygon.

The hole portions 14 may be formed over the entire region of the substrate 11 that is opposed to the first electrode layer 12, or in at least part of the region of the substrate 11 that is opposed to the first electrode layer 12. In the embodiment shown in Fig. 1, the hole portions 14 are formed in the inner region 11d, which is positioned inside the peripheral region 11c of the substrate 11, in the region of the substrate 11 that is opposed to the first electrode layer 12.

As shown in Fig. 2, the hole portions 14, which are open in the main face 11b, are regularly arranged. There is no particular limitation on the arrangement pattern of the hole portions 14, and various arrangement patterns can be adopted as long as gas is smoothly supplied via the hole portions 14 to the first electrode layer 12. Fig. 2 shows a state in which the hole portions 14 are arranged in a staggered manner. In plan view, the shortest distance between the outer peripheries of the hole portions 14 that are adjacent to each other is preferably from 3 to 50 µm, more preferably from 4 to 40 µm, and even more preferably from 5 to 20 µm, on average, in view of increasing the area of the first electrode layer 12 that comes into contact with the gas supplied through the hole portions 14. By increasing the area of the first electrode layer 12 that comes into contact with the supplied gas, the electrical resistance of the solid electrolyte assembly 10 can be reduced. Accordingly, for example, when the solid electrolyte assembly 10 is used in a solid oxide fuel cell, the output of the cell can be increased.

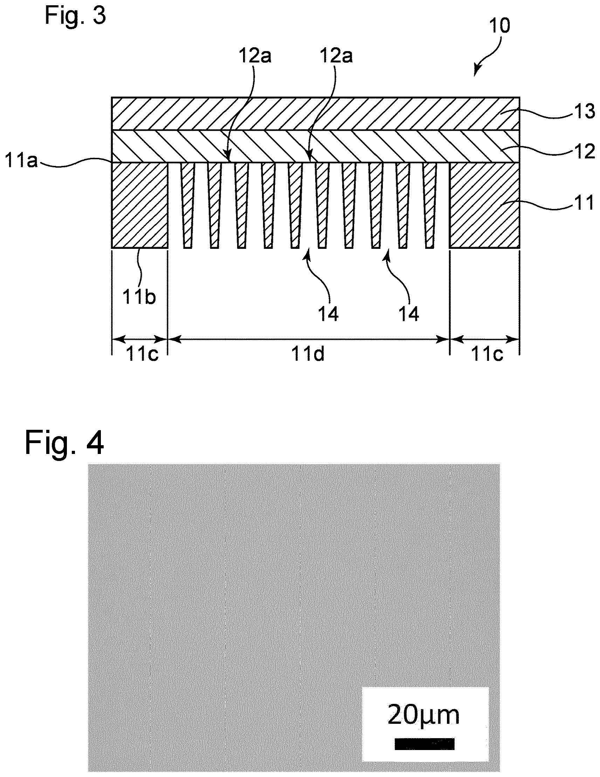

The hole portions 14 linearly extend between the two main faces 11a and 11b of the substrate 11. The horizontal cross-sections of the hole portions 14 have the same shape at any position between the two main faces 11a and 11b of the substrate 11. For example, in a case where the horizontal cross-sections of the hole portions 14 are circular as shown in Fig. 2, the hole portions 14 may be spaces in the shape of cylinders. Alternatively, the horizontal cross-sections of the hole portions 14 may have different shapes according to the position between the two main faces 11a and 11b of the substrate 11. For example, the opening area in the exposed face of the substrate 11 (i.e., the main face 11b) may be larger than the opening area in the face of the substrate 11 that is opposed to the first electrode layer 12 (i.e., the main face 11a). For example, as shown in Fig. 3, the hole portions 14 may be spaces in the shape of circular truncated cones. In this case, as shown in Fig. 3, the portions corresponding to the bottom faces of the circular truncated cones correspond to the openings in the main face 11b, and the portions corresponding to the upper faces of the circular truncated cones correspond to the openings on the main face 11a. The hole portions 14 having this shape can also further improve the gas supply performance upon supplying oxygen gas or the like to the first electrode layer 12 when an electrochemical element including the solid electrolyte assembly 10 is used. In this case, the ratio of the opening area of the hole portions 14 in the main face 11a is designated as S1 and the opening area of the hole portions 14 in the main face 11b is designated as S2; the ratio S2/S1 is preferably from 1 to 50, more preferably from 2 to 25, and even more preferably from 5 to 15, in view of further improving the gas supply performance to the first electrode layer 12.

In view of maintaining the strength of the first electrode layer 12, the solid electrolyte layer 13, and a second electrode layer described later, the opening area of each of the hole portions 14 in the face of the substrate 11 that is opposed to the first electrode layer 12 (i.e., the main face 11a) is preferably from 300 to 71000 µm², more preferably from 700 to 8000 µm², and even more preferably from 1200 to 4000 µm².

In view of increasing the area of the first electrode layer 12 that comes into contact with the gas supplied through the hole portions 14 in light of the opening area of the hole portions 14 described above, the ratio of the total opening area of the hole portions 14 open in the face of the substrate 11 that is opposed to the first electrode layer 12 (i.e., the main face 11a) to the area of the region in which the hole portions 14 are formed is preferably from 20 to 80%, more preferably from 40 to 70%, and even more preferably from 50 to 60%.

The thickness of the substrate 11 is preferably from 10 to 1000 µm, more preferably from 100 to 650 µm, and even more preferably from 250 to 350 µm. When the thickness of the substrate 11 is within this range, the substrate 11 sufficiently functions as a support for the first electrode layer 12, the solid electrolyte layer 13, and a later-described second electrode layer, and can also require less time for an etching process of the substrate 11, which will be described later. The thickness of the substrate 11 can be measured using a caliper or a digital instrument for measuring the thickness, for example.

There is no particular limitation on the material of the substrate 11, as long as the material do not interfere with the electrochemical reaction by the solid electrolyte assembly 10. In view of successfully forming the hole portions 14, it is advantageous to form the hole portions 14 using an etching method. From this viewpoint, the material of the substrate 11 is preferably a dry-etchable or wet-etchable material. Examples of the material that can be etched include silicon and its compounds, semiconductors such as gallium arsenide, glass such as quartz, metals such as aluminum, copper, and nickel and their alloys, and ceramics such as strontium titanate and magnesia. Among these materials, it is particularly preferable to use silicon in view of mass production and etching. Reactive ion etching (RIE) with fluorocarbon or halogen gas can be used as a dry etching method. Among RIEs, deep reactive ion etching (DRIE) is preferable, in which an etching process with SF₆ (sulfur hexafluoride) and a passivation process with fluoroalkane gas such as C₄F₈ (octafluorocyclobutane) are alternately performed. As wet etching method, isotropic etching with hydrofluoric acid, nitric acid, sulfuric acid, phosphoric acid, or the like, or anisotropic etching with alkaline solutions such as KOH (potassium hydroxide), TMAH (tetramethylammonium hydroxide), or EDP (ethylenediamine pyrocatechol) can be used.

In the solid electrolyte assembly 10 shown in Fig. 1, the solid electrolyte layer 13 is arranged via the first electrode layer 12 on the substrate 11. The solid electrolyte layer 13 typically has a uniform thickness, and is made of a solid material containing an ion-conductive material. Typically, a material having oxide ion conductivity is used for the solid electrolyte layer 13, but anion-conductive materials such as those having carbonic acid ion conductivity or halide ion conductivity, cation-conductive materials, or proton-conductive materials may also be used according to the specific application of the solid electrolyte assembly 10. Examples of the cation-conductive materials include materials having lithium ion conductivity such as Li₅La₃Ta₂O₁₂ (LLT) and Li₇La₃Zr₂O₁₂ (LLZ). Examples of the proton-conductive materials include BaZrO₃ and BaZrCeO₃.

In a case where the solid electrolyte layer 13 has oxide ion conductivity, the solid electrolyte layer 13 is preferably made of a compound containing M¹, M², and O. Use of such a compound can further increase the oxide ion conductivity of the solid electrolyte layer 13. M¹ represents one or more elements selected from the group consisting of La, Ce, Pr, Nd, Pm, Sm, Eu, Gd, Tb, Dy, Ho, Er, Yb, Lu, Be, Mg, Ca, Sr, Y, Ba, and Bi. M² represents one or more elements selected from the group consisting of Mg, Al, Sc, Ti, V, Cr, Mn, Fe, Co, Ni, Ga, Zr, Ta, Nb, B, Si, Ge, Zn, Sn, W, and Mo. The above-mentioned compound preferably has an apatite-type crystal structure.

In particular, the solid electrolyte layer 13 preferably contains a composite oxide represented by Formula (1) M¹_{9.33+x}[T_{6.00-y}M²_{y}]O_{26.0+z}, in view of further increasing the oxide ion conductivity of the solid electrolyte layer 13. In the formula, M¹ represents one or more elements selected from the group consisting of La, Ce, Pr, Nd, Pm, Sm, Eu, Gd, Tb, Dy, Ho, Er, Yb, Lu, Be, Mg, Ca, Sr, Y, Ba, and Bi, as described above. T includes an element Si or Ge, or both of them. M² represents one or more elements selected from the group consisting of Mg, Al, Sc, Ti, V, Cr, Mn, Fe, Co, Ni, Ga, Zr, Ta, Nb, B, Zn, Sn, W, and Mo. x represents a number of -1.33 to 1.50, y represents a number of 0.00 to 3.00, and z represents a number of -5.00 to 5.20. The ratio of the number of moles of M¹ to the number of moles of T is 1.33 to 3.61. The above-mentioned composite oxide preferably has an apatite-type crystal structure.

In Formula (1), La, Ce, Pr, Nd, Pm, Sm, Eu, Gd, Tb, Dy, Ho, Er, Yb, Lu, Be, Mg, Ca, Sr, Y, Ba, and Bi, which are listed as M¹, are elements that have common characteristics; specifically, they are lanthanoids or group 2 elements that are capable of becoming positively charged ions and forming apatite-type hexagonal structures. Among these elements, M¹ is preferably one or more elements selected from the group consisting of La, Nd, Ba, Sr, Ca, Y, Bi, and Ce, and more preferably either one of La or Nd, or a combination of La and one or more elements selected from the group consisting of Nd, Ba, Sr, Ca, Y, Bi, and Ce, in view of further increasing the oxide ion conductivity. Furthermore, T in Formula (1) preferably includes an element Si or Ge, or both of them.

The M² element in Formula (1) is preferably one or more elements selected from the group consisting of Mg, Al, Sc, Ti, V, Cr, Mn, Fe, Co, Ni, Ga, Zr, Ta, Nb, B, Zn, Sn, W, and Mo, for example. Among these elements, B, Zn, and W are preferable, in view of increasing the oxide ion conductivity.

In Formula (1), x is preferably from -1.33 to 1.50, and more preferably from -1.00 to 1.00, and, particularly, x is preferably 0.00 or more or 0.70 or less, and more preferably 0.45 or more or 0.65 or less, in view of increasing the degree of orientation and the oxide ion conductivity. In Formula (1), y is preferably from 0.00 to 3.00, more preferably 0.40 or more and less than 1.00, and even more preferably from 0.40 to 0.90, and, particularly, y is preferably 0.80 or less, more preferably 0.70 or less, and even more preferably from 0.50 to 0.70, in view of occupation of the site of the element T in the apatite-type crystal lattice and increase in the oxide ion conductivity. In Formula (1), z is preferably from -5.00 to 5.20, more preferably from -3.00 to 2.00, and, particularly, z is preferably -2.00 or more or 1.50 or less, and more preferably -1.00 or more or 1.00 or less, in view of maintaining the electroneutrality in the apatite-type crystal lattice.

The ratio of the number of moles of M¹ to the number of moles of T, (9.33+x)/(6.00-y), in Formula (1), is preferably from 1.33 to 3.61, more preferably from 1.40 to 3.00, and even more preferably from 1.50 to 2.00, in view of maintaining the spatial occupation ratio in the apatite-type crystal lattice.

Among the composite oxides represented by Formula (1), it is preferable to use a composite oxide in which M¹ is lanthanum, that is, a composite oxide represented by La_{9.33+x}[T_{6.00-y}M²_{y}]O_{26.0+z}, in view of further increasing the oxide ion conductivity. Specific examples of the composite oxide represented by La_{9.33+x}[T_{6.00-y}M²_{y}]O_{26.0+z} include La_{9.33+x}(Si_{5.30}B_{0.70})O_{26.0+z}, La_{9.33+x}(Si_{4.70}B_{1.30})O_{26.0+z}, La_{9.33+x}(Si_{4.70}Ge_{1.30})O_{26.0+z}, La_{9.33+x}(Si_{4.70}Zn_{1.30})O_{26.0+z}, La_{9.33+x}(Si_{4.70}W_{1.30})O_{26.0+z}, La_{9.33+x}(Si_{4.70}Sn_{1.30})O_{26.0+z}, and La_{9.33+x}(Ge_{4.70}B_{1.30})O_{26.0+z}. Among the composite oxides represented by Formula (1), it is more preferable to use a composite oxide in which M¹ and T are lanthanum and Si, respectively, that is, a composite oxide containing La and Si. A composite oxide represented by Formula (1) can be produced by the method disclosed in WO 2016/111110, for example.

In a case where the solid electrolyte layer 13 has oxide ion conductivity, the solid electrolyte layer 13 is also preferably at least one selected from the group consisting of yttrium-stabilized zirconia (YSZ), samarium-doped ceria (SDC), gadolinium-doped ceria (GDC), and yttrium-doped bismuth oxide (YBO), though a composite oxide containing La and Si is preferred as described above .

The YSZ preferably has a ratio of the number of moles of yttrium (Y) to the total number of moles of zirconium (Zr) and yttrium, Y/(Zr+Y), of 0.05 to 0.15. The SDC preferably has a ratio of the number of moles of samarium (Sm) to the total number of moles of cerium (Ce) and samarium, Sm/(Ce+Sm), of 0.10 to 0.25. The GDC preferably has a ratio of the number of moles of gadolinium (Gd) to the total number of moles of cerium (Ce) and gadolinium, Gd/(Ce+Gd), of 0.10 to 0.25. The YBO preferably has a ratio of the number of moles of yttrium (Y) to the total number of moles of bismuth (Bi) and yttrium, Y/(Bi+Y), of 0.10 to 0.30.

The thickness of the solid electrolyte layer 13 is preferably from 10 to 1000 nm, more preferably from 30 to 500 nm, and even more preferably from 50 to 300 nm, in view of effectively reducing the electrical resistance of the solid electrolyte assembly 10. The thickness of the solid electrolyte layer 13 can be measured by using a stylus profilometer or through cross-sectional observation using an electron microscope.

In the solid electrolyte assembly 10 shown in Fig. 1, the first electrode layer 12 is positioned between the substrate 11 and the solid electrolyte layer 13. The first electrode layer 12 functions as an electrode of the above-described solid electrolyte layer 13. For this purpose, the first electrode layer 12 is made of a metal element with catalytic capability for oxygen reduction, that is, at least one of platinum group elements, gold, and alloys containing any of these elements (hereinafter collectively referred to as "platinum or the like"). Furthermore, the first electrode layer 12 contains a metal oxide having ion conductivity (hereinafter, also referred to as an "ion-conductive metal oxide"). The platinum or the like is preferably present in the form of a simple metal in the first electrode layer 12. The platinum group elements herein refer to any of Pt, Pd, Rh, Ir, Ru, and Os. The alloys containing any of platinum group elements and gold refer to an alloy at least containing in part any of platinum group elements and gold. Examples of the elements constituting the alloys other than the platinum group elements or gold include transition metal elements such as Ni and Fe. The platinum or the like used in the first electrode layer is preferably Pt, in view of increasing the electrode's catalytic capability for oxygen reduction.

The first electrode layer 12 also functions as a support for the solid electrolyte layer 13. Specifically, in the first electrode layer 12, the regions corresponding to the hole portions 14 formed in the substrate 11 (the regions indicated by the reference numeral 12a in Fig. 1) are not supported by the substrate 11. Hereinafter, the regions indicated by the reference numeral 12a may also be referred to as "unsupported regions". The portions of the solid electrolyte layer 13 located directly above the unsupported regions 12a are supported only by the unsupported regions 12a. Accordingly, if the support by the unsupported regions 12a is not sufficient, it is difficult to maintain the layer structure of the solid electrolyte layer 13. Thus, in the solid electrolyte assembly 10 of this embodiment, the first electrode layer 12 is provided between the substrate 11 and the solid electrolyte layer 13, thereby to reliably maintain the layer structure of the solid electrolyte layer 13 at positions corresponding to the unsupported regions 12a in the first electrode layer 12.

In the first electrode layer 12 containing the platinum or the like and the ion-conductive metal oxide, the platinum or the like and the ion-conductive metal oxide preferably form so-called cermet, in view of more reliably maintaining the layer structure of the solid electrolyte layer 13 and reducing the electrical resistance of the solid electrolyte assembly 10. For example, in the first electrode layer 12, the ion-conductive metal oxide and the platinum or the like preferably have a co-continuous structure. In order to form the first electrode layer 12 having such a co-continuous structure, the later-described method for forming the first electrode layer 12 may be used, for example. Whether or not the first electrode layer 12 has a co-continuous structure can be determined through cross-sectional observation using a scanning electron microscope (SEM) or a transmission electron microscope (TEM) and energy-dispersive X-ray spectroscopy (EDS), for example.

The proportion of the ion-conductive metal oxide in the first electrode layer 12 is preferably from 1 to 50% by volume, more preferably from 2 to 40% by volume, and even more preferably from 3 to 30% by volume, in terms of volume calculated from the film-forming speed of a single film of the platinum or the like and the film-forming speed of the ion-conductive oxide. The proportion of the ion-conductive metal oxide in the first electrode layer 12 in this range is advantageous in view of allowing the first electrode layer 12 to sufficiently function as an electrode of the solid electrolyte layer 13 and allowing the first electrode layer 12 to sufficiently function as a support for the solid electrolyte layer 13 and the second electrode layer.

From the same point of view, the proportion of the platinum or the like in the first electrode layer 12 is preferably from 50 to 99% by volume, more preferably from 60 to 98% by volume, and even more preferably from 70 to 97% by volume, in terms of volume calculated from the film-forming speed of a single film of the platinum or the like and the film-forming speed of the ion-conductive oxide.

The proportions of the ion-conductive metal oxide and the platinum or the like in the first electrode layer 12 can be measured using the following method. A film of the ion-conductive metal oxide and that of the platinum or the like are separately formed on a substrate, and their film thicknesses are measured using a stylus profilometer. From the results, the proportion of the ion-conductive metal oxide and that of the platinum or the like when film formation is performed by simultaneously using them can be calculated. Alternatively, the proportions can be measured also by performing EDS using a SEM or a TEM and converting the ratio of the number of atoms of each element in the film to the volume thereof with reference to the density to achieve quantitative analysis.

The first electrode layer 12 is preferably porous. This allows the gas supplied through the hole portions 14 formed in the substrate 11 to diffuse throughout the first electrode layer 12, thereby facilitating the electrochemical reaction. From this point of view, the average porosity of the first electrode layer 12 is preferably from 2 to 15%, and more preferably from 4 to 10%.

The average porosity can be measured using the following method, for example. First, a surface secondary electron image of the first electrode layer 12 in which cermet and void portions are clearly distinguishable is acquired using a SEM at an acceleration voltage of 5 kV under a magnification of 5000x. The image contrast of the image to be acquired is adjusted as appropriate such that the cermet and void portions can be distinguished by lightness. A 23 µm × 17 µm region of the acquired image is binarized into light regions corresponding to cermet portions and dark regions corresponding to void portions using an Image-Pro (registered trademark) (manufactured by Media Cybernetics), and the area ratios of these regions are measured to obtain an average porosity.

The thickness of the first electrode layer 12 is preferably from 50 to 1000 nm, more preferably from 100 to 500 nm, and even more preferably from 200 to 400 nm. The first electrode layer 12 having a thickness within this range sufficiently functions as an electrode of the solid electrolyte layer 13, and sufficiently functions as a support for the solid electrolyte layer 13. The thickness of the first electrode layer 12 can be measured by using a stylus profilometer or through cross-sectional observation using an electron microscope.

The ion-conductive metal oxide, which is one of the components constituting the first electrode layer 12, has ion conductivity as described above. The ion-conductive metal oxide typically has oxide ion conductivity, but may have anion conductivity such as carbonic acid ion conductivity or halide ion conductivity, or cation conductivity such as lithium ion conductivity, according to the specific application of the solid electrolyte assembly 10. The ion conductivity of the ion-conductive metal oxide is preferably the same type as the ion conductivity of the solid electrolyte layer 13 described above, in view of allowing the solid electrolyte assembly 10 to sufficiently function. For example, in a case where the solid electrolyte layer 13 has oxide ion conductivity, the ion-conductive metal oxide preferably has oxide ion conductivity.

In a case where the ion-conductive metal oxide has oxide ion conductivity, the ion-conductive metal oxide is preferably a metal oxide containing one or more rare earths. Examples of such a metal oxide include at least one selected from the group consisting of a composite oxide containing lanthanum and silicon, yttrium-stabilized zirconia, samarium-doped ceria, gadolinium-doped ceria, and yttrium-doped bismuth oxide. The details of these metal oxides are as described above for the materials for the solid electrolyte layer 13.

In particular, the ion-conductive metal oxide is preferably a mixed conductor having both ion conductivity and electron conductivity, in view of further improving the performance of the solid electrolyte assembly 10. In a case where the solid electrolyte layer 13 has oxide ion conductivity, the ion-conductive metal oxide is preferably a mixed conductor having both oxide ion conductivity and electron conductivity.

As the mixed conductor having both oxide ion conductivity and electron conductivity, a material represented by ABO_{3-δ} and having a perovskite structure is preferably used, for example. In this formula, A represents a rare earth element, an alkaline-earth metal element, an alkali metal element, a group 14 element, or a group 15 element. B represents a transition metal element or a group 13 element, and may be Sc, Ti, V, Cr, Mn, Fe, Co, Ni, Cu, Zn, Y, Zr, Nb, Mo, Tc, Ru, Rh, Pd, Ag, Ta, In, or W, for example. δ represents a fraction that occurs depending on the valences and amounts of A, B, and O, and may be either positive or negative. Various oxides represented by ABO_{3-δ} and having a perovskite structure are known, and it is also known that such oxides have various crystal systems, such as cubic, tetragonal, rhombohedral, and orthorhombic crystal systems. Among these crystal systems, it is preferable to use ABO_{3-δ} metal oxides having a cubic perovskite structure.

In an oxide represented by ABO_{3-δ}, B, which is a transition metal element or a group 13 element, is preferably one or more elements selected from the group consisting of Sc, Ti, V, Cr, Mn, Fe, Co, Ni, Cu, Zn, Y, Zr, Nb, Mo, Tc, Ru, Rh, Pd, Ag, Ta, In, and W, in view of further improving the oxide ion conductivity and the electron conductivity. In view of increasing the oxide ion conductivity of the solid electrolyte assembly 10 as a whole, it is also advantageous that in the oxide represented by ABO_{3-δ}, some B sites should be cobalt and nickel.

In view of increasing the oxide ion conductivity of the solid electrolyte assembly 10 as a whole, it is advantageous that the oxide represented by ABO_{3-δ} should contain lanthanum at some of the A sites. Hereinafter, such an oxide may also be referred to as an "oxide *a*". The content of lanthanum in the oxide *a* is preferably from 0.05 to 0.8, more preferably from 0.15 to 0.70, and even more preferably from 0.15 to 0.60, in terms of the ratio of the number of atoms of lanthanum to that of all elements at the A sites. The reason why the use of the oxide *a* increases the oxide ion conductivity is not clear, but the inventors of the present invention consider that, lanthanum contained at some of the A sites in the oxide *a* may increase the electronic conductivity of the oxide *a* to reduce the resistance at the interface between the solid electrolyte and the electrode.

Whether or not lanthanum is present at some of the A sites in the oxide represented by ABO_{3-δ}, and also the ratio of the number of atoms of lanthanum to that of all the elements at the A sites can be measured through structural analysis using X-ray diffractometry and composition analysis using energy-dispersive X-ray spectroscopy (EDS), an electron probe microanalyzer (EPMA), or ICP emission spectroscopic analysis.

The alkaline-earth metal element that may occupy the A sites in the oxide represented by ABO_{3-δ} is preferably one or more elements selected from the group consisting of barium and strontium, in view of increasing the oxide ion conductivity of the solid electrolyte assembly 10 as a whole.

The oxide represented by ABO_{3-δ} is preferably a composite oxide containing La, Sr, Co, and Ni. The use of such a composite oxide can further improve the oxide ion conductivity of the solid electrolyte assembly 10 as a whole. Specific examples of the composite oxide include La_{0.8}Sr_{0.2}Co_{0.5}Ni_{0.5}O_{3-δ}, La_{0.6}Sr_{0.4}Co_{0.8}Ni_{0.2}O_{3-δ}, and La_{0.6}Sr_{0.4}Co_{0.2}Fe_{0.78}Ni_{0.02}O_{3-δ}.

Although not shown, a layer of a compound containing the same element as that contained in the substrate 11 or the same element as that contained in the first electrode layer 12 may be present on the face of the substrate 11 that is opposed to the first electrode layer 12, i.e., the main face 11a. For example, in a case where the substrate 11 is made of silicon, a layer of a silicon-containing compound, such as an SiO₂ layer, may be formed on the main face 11a. In a case where the first electrode layer 12 contains SDC, which is a material having oxide ion conductivity, an SDC layer (SDC layer free from the platinum or the like) may be formed on the main face 11a. Since SiO₂ and SDC are materials with low electron conductivity, an SiO₂ layer or an SDC layer formed on the main face 11a advantageously suppresses the leakage of current to the substrate 11, even if the substrate 11 is made of a material with high electron conductivity (e.g., silicon).

After the through-holes 14 are formed in the substrate 11, the portions of the above-mentioned layer of a compound containing the same element as that contained in the substrate 11 or the same element as that contained in the first electrode layer 12, the portions of the layer being present above the through-holes 14, are preferably removed by reactive ion etching (RIE), in view of sufficiently supplying gas to the first electrode layer 12.

In the solid electrolyte assembly 10 of the embodiment shown in Fig. 1, a second electrode layer (not shown) may be provided on the face of the solid electrolyte layer 13 that is located opposite to the face of the solid electrolyte layer 13 opposed to the first electrode layer 12. By providing the second electrode layer, additional functions can be given to the solid electrolyte assembly 10. As long as the second electrode layer functions as an electrode for the solid electrolyte layer 13, there is no particular limitation on the type of the material for this electrode layer, and the material may be selected according to the application of the electrochemical element. Examples of the material contained in the second electrode layer include metals such as Ni, Zn, Sn, Li, Au, Ag, Pt, Rh, and Pd, alloys and metal oxides containing these elements, carbonates such as lithium carbonate and barium carbonate, mixed conductors containing an element such as La, Sr, or Co and having both oxide ion conductivity and electron conductivity, and zinc tungstate, and further include complex materials thereof. The materials described above for the first electrode layer 12 may also be used as the material for the second electrode layer.

As with the first electrode layer 12 described above, the second electrode layer preferably has a co-continuous structure in which metal oxide moieties are linked through the platinum or the like. The thickness of the second electrode layer may be the same as described for the first electrode layer 12.

Next, a preferred method for producing the solid electrolyte assembly 10 of the embodiment shown in Fig. 1 will be described.

The production method of the solid electrolyte assembly 10 includes a step of forming the first electrode layer 12, and subsequent steps of forming the solid electrolyte layer 13 and the second electrode layer. Hereinafter, these steps will be described.

In the step of forming the first electrode layer 12, the substrate 11 is first provided, and the first electrode layer 12 is formed on one face of the substrate 11. Various thin-film forming methods can be used to form the first electrode layer 12. Specifically, the first electrode layer 12 can be formed using a physical vapor deposition (PVD) method such as vapor deposition, sputtering, and ion plating, or a chemical vapor deposition (CVD) method. Among these various methods, it is preferable to use sputtering, because sputtering is excellent in terms of mass production, and can facilitate the formation of the first electrode layer 12 with a co-continuous structure in which ion-conductive metal oxide moieties are linked through the platinum or the like.

When the first electrode layer 12 is formed through sputtering, a target of the platinum or the like and a target of the ion-conductive metal oxide can be used to form the first electrode layer 12 containing the platinum or the like and the ion-conductive metal oxide. The porosity of the first electrode layer 12 to be formed can be controlled by adjusting the gas pressure during sputtering. The porosity of the first electrode layer 12 can be improved by increasing the gas pressure. The respective proportions of the platinum or the like and the ion-conductive metal oxide in the first electrode layer 12 can be adjusted by appropriately setting the power supplied to the targets when performing the sputtering.

After the forming of the first electrode layer 12, the step of forming the solid electrolyte layer 13 is performed. The solid electrolyte layer 13 is formed on the face of the first electrode layer 12 that is located opposite to the face of the first electrode layer 12 opposed to the substrate 11. As with the formation of the first electrode layer 12, various thin-film forming methods can be used to form the solid electrolyte layer 13. Among the thin-film forming methods, it is preferable to use sputtering because sputtering can facilitate the formation of the solid electrolyte layer 13 of a desired composition.

A step of firing the first electrode layer 12 and, subsequently, a step of forming the hole portions 14 in the substrate 11 may be performed after the formation of the first electrode layer 12 and before the formation of the solid electrolyte layer 13.

The step of firing the first electrode layer 12 is performed in order to reliably produce a co-continuous structure in which ion-conductive metal oxide moieties are linked through the platinum or the like, that is, cermet in the first electrode layer 12. In view of reliably producing the co-continuous structure, the firing temperature is preferably from 300 to 1300°C, more preferably from 500 to 1000°C, and even more preferably from 600 to 900°C.

From the same point of view, the firing time at the above-mentioned firing temperature is preferably from 1 minute to 10 hours, more preferably from 10 minutes to 5 hours, and even more preferably from 30 minutes to 3 hours.

There is no limitation on the firing atmosphere, and it may be an oxygen-containing atmosphere or a reductive atmosphere.

In a case where the electrode layer is a layer containing, for example, SDC and the platinum or the like, a layer made only of SDC is formed on the face of the substrate 11 that is opposed to the electrode layer, through the step of firing the electrode layer. In a case where the substrate 11 is made of silicon, an SiO₂ layer is formed on the face of the substrate 11 that is opposed to the electrode layer.

After the first electrode layer 12 is fired, a step of forming hole portions in the substrate 11 can be performed. The step of forming the hole portions can be conveniently performed from the main face 11b side, which is the exposed face of the substrate 11. The step of forming the hole portions is preferably performed using deep reactive ion etching (DRIE) that is a dry etching method or anisotropic etching that is a wet etching method. By using any of these etching methods, deep hole portions 14 can be easily formed.

The dry etching method can be performed using known photolithography techniques. There is no particular limitation on, for example, the method for forming a photomask for the dry etching method and the type of dry etching gas, and they may be selected as appropriate according to the materials of the substrate 11.

The wet etching method can also be performed using known photolithography techniques. There is no particular limitation on, for example, the method for forming a photomask for the wet etching method and the type of chemical solution, and they may be selected as appropriate according to the materials of the substrate 11.

The shape of the hole portions 14 formed is straight as shown in Fig. 1 when DRIE is used, and tapered as shown in Fig. 3 when anisotropic etching is used.

After the step of forming the hole portions is completed, the step of forming the solid electrolyte layer 13 is then performed. As with the formation of the first electrode layer 12, various thin-film forming methods can be used to form the solid electrolyte layer 13. Specifically, the solid electrolyte layer 13 can be formed using a physical vapor deposition (PVD) method such as vapor deposition, sputtering, and ion plating, or a chemical vapor deposition (CVD) method. It is preferable to use sputtering because sputtering is excellent in terms of mass production.

It is preferable to perform a step of firing the formed solid electrolyte layer 13. The step of firing the solid electrolyte layer 13 can be performed in the same manner as described above for the step of firing the first electrode layer 12.

In this production method, the firing step and the hole portion-forming step, which have been described above, may also be performed after the solid electrolyte layer 13 is formed. In this case, the step of forming the hole portions in the substrate 11 does not have to be performed after the completion of the step of forming the first electrode layer 12 and before the step of forming the solid electrolyte layer 13. Furthermore, the firing step in this case is performed mainly for the solid electrolyte layer 13 and not for the first electrode layer 12, and thus the step of firing the first electrode layer 12 can be performed after the completion of the step of forming the first electrode layer 12 and before the step of forming the solid electrolyte layer 13. It will be appreciated that, if the first electrode layer 12 is also sufficiently fired through the step of mainly firing the solid electrolyte layer 13, the additional step of firing the first electrode layer 12 does not have to be performed after the completion of the step of forming the first electrode layer 12 and before the step of forming the solid electrolyte layer 13.

In a case where it is intended to produce a solid electrolyte assembly 10 including a second electrode layer, the second electrode layer may be formed after the step of forming the solid electrolyte layer 13. In this case, a firing step may be performed after the completion of the step of forming the solid electrolyte layer 13, and then another firing step may be performed after the completion of the step of forming the second electrode layer; however, in view of simplifying the processes, it is preferable that a firing step should not be performed after the completion of the step of forming the solid electrolyte layer 13, and that a firing step should be performed after both of the step of forming the solid electrolyte layer 13 and the step of forming the second electrode layer are completed.

In a case where the second electrode layer is formed, a firing step may be performed after the completion of the step of forming the second electrode layer, and then the step of forming the hole portions may be performed. In this case, the step of forming the hole portions does not have to be performed after the completion of the step of forming the first electrode layer 12 and before the step of forming the solid electrolyte layer 13.

The solid electrolyte assembly 10 produced by the above-described method is suitably used as a component of an electrochemical element. The electrochemical element is suitable, for example, as a solid electrolyte fuel cell, a gas sensor such as an oxygen sensor, and a gas permeable element such as an oxygen permeable element.

Although the present invention has been described above on the basis of its preferred embodiment, the invention is not limited to the aforementioned embodiment. For example, the shape and the arrangement pattern of the hole portions 14 formed in the substrate 11 are not limited to those shown in Fig. 1 or 3.

Although the solid electrolyte assembly 10 of the illustrated embodiment has a structure in which the first electrode layer 12 and the solid electrolyte layer 13 are in direct contact with each other, one or more additional layers may be provided between the first electrode layer 12 and the solid electrolyte layer 13. The same applies to the structure between the second electrode layer and the solid electrolyte layer 13.

### Examples

The invention will now be described in more detail by way of examples. However, the scope of the invention is not limited to these examples.

### Example 1

A silicon substrate with a crystal orientation of <100> and a thickness of 300 µm was provided. A first electrode layer with a thickness of 800 nm was formed on one face of the substrate by sputtering. As targets for the sputtering, a platinum target with a size of 2 inches and an SDC target with a size of 4 inches were used. The film formation was performed by co-sputtering in which power was supplied to the two targets simultaneously. The DC sputtering was performed for the platinum, and the RF sputtering was performed for the SDC. The flow rate of argon gas was set to 50 sccm, and the argon pressure was set to 4 Pa. The power was 200 W for each, and the sputtering was performed at room temperature. The resulting first electrode layer was porous and had a co-continuous structure in which SDC moieties were linked through platinum. The first electrode layer contained 6% by volume of SDC and 94% by volume of platinum. The thus formed first electrode layer was fired at 900°C for 1 hour under an atmospheric atmosphere.

A solid electrolyte layer with a thickness of 200 nm was formed on the first electrode layer by RF sputtering. As a target for the sputtering, an La_{9.6}Si_{5.3}B_{0.7}O_{26.1} (LSBO) target with a size of 4 inches was used. The flow rate of argon gas was set to 50 sccm, and the argon pressure was set to 0.5 Pa. The power was 200 W, and the sputtering was performed at room temperature. The thus formed solid electrolyte layer was fired at 900°C for 1 hour under an atmospheric atmosphere.

Next, 100 hole portions were formed in the substrate using a deep etching method. The hole portions each had a circular cross-sectional shape with a diameter of 50 µm. The ratio of the total opening area of the hole portions open in the face of the substrate that was opposed to the electrode layer to the area of the region in which the hole portions were formed was 38%. The desired solid electrolyte assembly 10 was thus obtained.

### Comparative Example 1

A solid electrolyte assembly was obtained in the same manner as in Example 1, except that the first electrode layer was not formed, that is to say, a solid electrolyte layer with a thickness of 200 nm was directly formed on the substrate through RF sputtering..

### Example 2

A silicon substrate with a crystal orientation of <100> and a thickness of 300 µm was provided. A first electrode layer with a thickness of 300 nm was formed on one face of this substrate by sputtering. As targets for the sputtering, a platinum target with a size of 2 inches and an SDC target with a size of 4 inches were used. The film formation was performed by co-sputtering in which power was supplied to the two targets simultaneously. The DC sputtering was performed for the platinum, and the RF sputtering was performed for the SDC. The flow rate of argon gas was set to 50 sccm, and the argon pressure was set to 4 Pa. The supplied power was 200 W for each, and the sputtering was performed at room temperature. The resulting first electrode layer was porous and had a co-continuous structure in which SDC moieties were linked through platinum. The first electrode layer contained 6% by volume of SDC and 94% by volume of platinum. The thus formed first electrode layer was fired at 900°C for 1 hour under an atmospheric atmosphere.

Next, 100 hole portions were formed in the substrate using a deep etching method. The hole portions each had a circular cross-sectional shape with a diameter of 50 µm. The ratio of the total opening area of the hole portions open in the face of the substrate that was opposed to the electrode layer to the area of the region in which the hole portions were formed was 38%. The shortest distance between the outer peripheries of the hole portions that were adjacent to each other was 20 µm.

After the hole portions were formed, a solid electrolyte layer with a thickness of 300 nm was formed on the first electrode layer by RF sputtering. As a target for the sputtering, an La_{9.6}Si_{5.3}B_{0.7}O_{26.1} target with a size of 4 inches was used. The flow rate of argon gas was set to 50 sccm, and the argon pressure was set to 0.5 Pa. The power was 200 W, and the sputtering was performed at room temperature.

Next, a second electrode layer with a thickness of 300 nm was formed on the solid electrolyte layer by sputtering. As targets for the sputtering, a platinum target with a size of 2 inches and an SDC target with a size of 4 inches were used. The film formation was performed by co-sputtering in which power was supplied to the two targets simultaneously. The DC sputtering was performed for the platinum, and the RF sputtering was performed for the SDC. The flow rate of argon gas was set to 50 sccm, and the argon pressure was set to 4 Pa. The supplied power was 200 W, and the sputtering was performed at room temperature. The resulting second electrode layer contained 8% by volume of SDC and 92% by volume of platinum. The thus formed second electrode layer and the above-described solid electrolyte layer were fired at 900°C for 1 hour under an atmospheric atmosphere. The desired solid electrolyte assembly 10 was thus obtained.

### Example 3

A solid electrolyte assembly 10 was obtained in the same manner as in Example 2, except that the thickness of the first electrode layer was changed to 260 nm.

### Comparative Example 2

A solid electrolyte assembly was obtained in the same manner as in Example 2, except for the following conditions.

The formation of the first electrode layer and that of the second electrode layer were each performed by DC sputtering by using only a platinum target with a size of 2 inches. The flow rate of argon gas was set to 50 sccm, and the argon pressure was set to 4 Pa. The supplied power was 200 W, and the sputtering was performed at room temperature. Both of the formed first electrode layer and second electrode layer were made only of platinum, and had a thickness of 300 nm. Furthermore, no hole portions were formed in the substrate.

### Evaluation 1

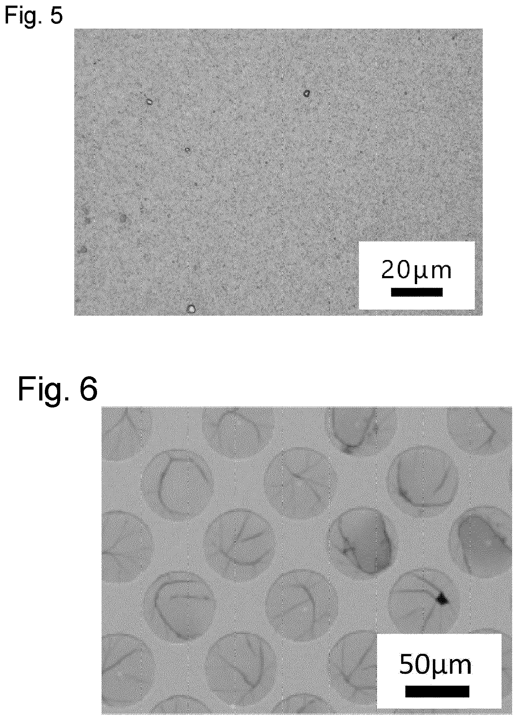

The solid electrolyte assemblies obtained in Examples 1 and 3 and Comparative Example 1 were evaluated in terms of strength of the first electrode layer and the solid electrolyte layer. Specifically, the first electrode layer and the solid electrolyte layer above the through-holes of each obtained solid electrolyte assembly were observed from the solid electrolyte layer side using an optical microscope, and whether or not the unsupported regions 12a of the first electrode layer 12, which correspond to the hole portions 14, were damaged (e.g., cracked or broken) was checked to calculate the survival rate. The survival rate (%) was calculated using the formula (number of unsupported regions 12a damaged, e.g., cracked or broken / number of all unsupported regions 12a observed) × 100. Table 1 and Figs. 4 to 6 show the results.

### Evaluation 2

The solid electrolyte assemblies obtained in Example 2 and Comparative Example 2 were evaluated through electrochemical measurement. Specifically, the measurement was performed according to an AC impedance method using an SI1260 manufactured by Solartron, in a frequency range from 1 MHz to 1 kHz at a measurement amplitude of 30 mV. The measurement results were plotted on a Nyquist diagram and then subjected to arc fitting using analysis software in the above-mentioned frequency range. In the thus obtained diagram, the value of the intersection point with the real axis was defined as the resistance. Table 1 shows the results.

**Table 1**

| | Substrate | Hole portion | First electrode layer | Solid electrolyte layer | Second electrode layer | Strength evaluation (survival rate) | Resistance (Ω) 1 MHz - 1 kHz |
|---|---|---|---|---|---|---|---|
| Ex. 1 | Si | Yes (ϕ50µm) | Pt/SDC | LSBO | - | 100% | - |
| Ex. 2 | Si | Yes (ϕ50µm) | Pt/SDC | LSBO | Pt/SDC | - | 2.5×10⁴ Ω |
| Ex. 3 | Si | Yes (ϕ50µm) | Pt/SDC | LSBO | Pt/SDC | 100% | - |
| Com.Ex. 1 | Si | Yes (ϕ50µm) | - | LSBO | - | 0% | - |
| Com.Ex. 2 | Si | No | Pt | LSBO | Pt | - | 2.2×10⁵ Ω |

As is clear from Figs. 4 to 6, the portions of the solid electrolyte layer above the through-holes were cracked and broken in Comparative Example 1, whereas none of them were damaged in Examples 1 and 3.

Furthermore, as is clear from Table 1, all portions of the solid electrolyte layer above the through-holes were cracked in Comparative Example 1, whereas none of the portions of the solid electrolyte layer above the through-holes were damaged in Example 1. From these results, it is clear that the presence of the first electrode layer supporting the solid electrolyte layer is effective in improving strength.

Moreover, as is clear from Table 1, the resistance value in Example 2 was below about one-eighth the resistance value in Comparative Example 2.

### Industrial Applicability

According to the present invention, even when a large number of through-holes are formed in a substrate of a solid electrolyte assembly, the first electrode layer effectively prevents damage to a solid electrolyte layer positioned above the through-holes, and thus the shape of the solid electrolyte layer can be stably maintained. Furthermore, since the first electrode layer contains at least one of platinum group elements, gold, and alloys containing any of these elements, and also a metal oxide having ion conductivity, a solid electrolyte assembly with low electrical resistance can be provided.

## Claims

1. A solid electrolyte assembly comprising a substrate, a first electrode layer, and a solid electrolyte layer, wherein the first electrode layer and the solid electrolyte layer are stacked in this order on one face of the substrate,
wherein the first electrode layer comprises: at least one selected from the group consisting of a platinum group element, gold, and an alloy containing any of these elements; and a metal oxide having ion conductivity, and
the substrate has a plurality of through-holes extending in a direction that intersects a face of the substrate that is opposed to the first electrode layer.

2. The solid electrolyte assembly according to claim 1, wherein the metal oxide has oxide ion conductivity.

3. The solid electrolyte assembly according to claim 1 or 2, wherein the metal oxide comprises one or more rare earths.

4. The solid electrolyte assembly according to any one of claims 1 to 3, wherein the metal oxide is at least one selected from the group consisting of a composite oxide containing lanthanum and silicon, yttrium-stabilized zirconia, samarium-doped ceria, gadolinium-doped ceria, and yttrium-doped bismuth oxide.

5. The solid electrolyte assembly according to any one of claims 1 to 4, wherein the metal oxide is a mixed conductor having both ion conductivity and electron conductivity.

6. The solid electrolyte assembly according to any one of claims 1 to 5, wherein a proportion of the metal oxide in the first electrode layer is from 1 to 50% by volume.

7. The solid electrolyte assembly according to any one of claims 1 to 6, wherein a thickness of the first electrode layer is from 50 nm to 1000 nm.

8. The solid electrolyte assembly according to any one of claims 1 to 7, wherein the substrate is made of a dry-etchable material.

9. The solid electrolyte assembly according to any one of claims 1 to 8, wherein an opening area of each of the through-holes in the face of the substrate that is opposed to the first electrode layer is from 300 µm² to 71000 µm².

10. The solid electrolyte assembly according to any one of claims 1 to 9, wherein an opening area of the through-hole in an exposed face of the substrate is larger than that in the face of the substrate that is opposed to the first electrode layer.

11. The solid electrolyte assembly according to any one of claims 1 to 10,
wherein the through-holes are each in the shape of a circle or a regular polygon in plan view, and
a shortest distance between outer peripheries of the through-holes that are adjacent to each other in plan view is from 3 µm to 50 µm on average.

12. The solid electrolyte assembly according to any one of claims 1 to 11, wherein the solid electrolyte layer has oxide ion conductivity.

13. The solid electrolyte assembly according to claim 12, wherein the solid electrolyte layer is at least one selected from the group consisting of a composite oxide containing lanthanum and silicon, yttrium-stabilized zirconia, samarium-doped ceria, gadolinium-doped ceria, and yttrium-doped bismuth oxide.

14. The solid electrolyte assembly according to any one of claims 1 to 13, wherein the solid electrolyte layer has: a first face which is opposed to the solid electrolyte layer; and a second face which is located opposite to the first face,
a second electrode layer is provided on the second face of the solid electrolyte layer.

15. The solid electrolyte assembly according to claim 14, wherein the second electrode layer comprises at least one selected from the group consisting of a platinum group element, gold, an alloy containing any of these elements, a metal oxide, and a complex material thereof.

16. The solid electrolyte assembly according to any one of claims 1 to 15, wherein a layer of a compound containing an element constituting the substrate or an element constituting the electrode layer is present on the face of the substrate that is opposed to the first electrode layer.

17. An electrochemical element comprising the solid electrolyte assembly according to any one of claims 1 to 16.
